# EUROPÄISCHE PATENTANMELDUNG

(11) **EP 0 884 090 A2**
(43) Veröffentlichungstag der Anmeldung: **16.12.1998**
(21) Anmeldenummer: 98100121.7
(22) Anmeldetag: 07.01.1998
(51) Int. Cl.: B01D 53/26

(54) **Warmregenerierter Adsorptionstrockner für gasförmige Medien**

(30) Priorität: 14.05.1997 DE 19720103
(71) Anmelder: Zander Aufbereitungstechnik GmbH, 45219 Essen (DE)
(72) Erfinder: Priess, Günter, 47807 Krefeld (DE)
(74) Vertreter: Knauf, Rudolf, Dipl.-Ing.

(57) **Zusammenfassung**

Die Erfindung betrifft einen warmregenerierten Adsorptionstrockner für gasförmige Medien mit einer oder mehreren parallelliegenden, insbesondere im Wechsel von Adsorption auf Regeneration umschaltbaren Adsorptionskammern (1,2). Zur Erwärmung des unter Druck in der Regenerationsphase der zu regenerierenden Adsorptionskammer (1) zugeführten gasförmigen Mediums wird dieses von einem Gebläse (6) an dessen Motor (7) vorbeigeleitet, indem es die Abwärme des Motors (7) aufnimmt.

## Beschreibung

Die Erfindung betrifft einen warmregenerierten Adsorptionstrockner für gasförmige Medien mit einer oder mehreren parallelliegenden Adsorptionskammern, die insbesondere im Wechsel von Adsorption auf Regeneration umschaltbar ist (sind), sowie mit einem Gebläse, das in einem ersten Abschnitt der Regenerationsphase ein durch einen Erhitzer erwärmtes gasförmiges Medium unter Druck der (den) zu regenerierenden Adsorptionskammer(n) und in einem zweiten Abschnitt der Regenerationsphase der (den) zu regenerierenden Adsorptionskammer(n) ein kühles gasförmiges Medium unter Unterdruck und in ungekehrter Strömungsrichtung zum ersten Abschnitt zuführt.

Adsorptionstrockner dieser Art sind bekannt (Zeitschrift "Produktion" vom 29.09.1988, Nr. 39, Seite 26). Bei einem solchen Adsorptionstrockner wird die gesamte für die Regeneration benötigte Wärme für das gasförmige Medium vor allem durch einen Erhitzer aufgebracht, der an der Ansaugseite des Gebläses liegt. Ein weiterer Teil der Wärmeenergie für das zu erwärmende gasförmige Medium wird aus der durch das Gebläse erzeugten Kompressionswärme gewonnen.

Der Erfindung liegt die Aufgabe zugrunde, einen warmregenerierten Adsorptionstrockner der eingangs genannten Art zu schaffen, bei dem die Regeneration mit einer besseren Wärmebilanz als bei herkömmlichen Adsorptionstrocknern erfolgt.

Diese Aufgabe wird erfindungsgemäß dadurch gelöst, daß die Motorwärme des Gebläses zur Erwärmung des der zur regenerierenden Adsorptionskammer im ersten Abschnitt der Regenerationsphase zugeführten gasförmigen Mediums dient.

Bei dem erfindungsgemäßen Adsorptionstrockner wird ein Teil der erforderlichen Wärmeenergie für das gasförmige Medium aus der vom Gebläse erzeugten Kompressionswärme und ein anderer Teil aus der Motorwärme gewonnen, die beim Stand der Technik nicht ausgenutzt wurde. Im einfachsten Fall ersetzt also der Motor den sonst üblichen zusätzlichen Erhitzer. Nur für den Fall, daß die Motorwärme nicht ausreichen sollte, kann ein zusätzlicher Erhitzer vorgesehen sein. Aber auch in diesem Fall arbeitet der erfindungsgemäße Adsorptionstrockner ökonomischer, weil zunächst einmal die Motorwärme für die Erwärmung des gasförmigen Mediums ausgenutzt wird und nur die Restwärme vom zusätzlichen Erhitzer aufgebracht werden muß. Darüber hinaus besteht auch noch die Möglichkeit, durch erhöhte Verdichtung des der Regeneration dienenden gasförmigen Mediums die Kompressionswärme weiter zu erhöhen, so daß auch bei nichtausreichender Motorwärme auf einen zusätzlichen Erhitzer verzichtet werden kann.

Nach einer Ausgestaltung der Erfindung läßt sich die Gewinnung der Motorwärme apparativ leicht dadurch verwirklichen, daß die Ansaugseite des Gebläses in einer insbesondere wärmegedänmten Kammer mit einer Ansaugöffnung liegt, durch die das zu erwärmende gasförmige Medium zur Aufnahme von Wärme am Motor vorbeigeleitet wird.

Die Wärmebilanz kann weiterhin auch dadurch verbessert werden, daß das Gebläse in der Kammer untergebracht wird, so daß auch noch die Abwärme des Gebläses ausgenutzt wird.

Nach einer weiteren Ausgestaltung der Erfindung weist die Kammer eine weitere Ansaugöffnung für ein extern erwärmtes gasförmiges Medium auf. Von dieser Ausgestaltung kann Gebrauch gemacht werden, wenn die Motorwärme bei extrem niedriger Temperatur des angesaugten gasförmigen Mediums nicht ausreicht, den für die Regeneration erforderlichen Volumenstrom mit der gewünschten Temperatur zur Verfügung zu stellen.

Im folgenden wird die Erfindung anhand einer Schemazeichnung eines warmregenerierten Adsorptionstrockners näher erläutert.

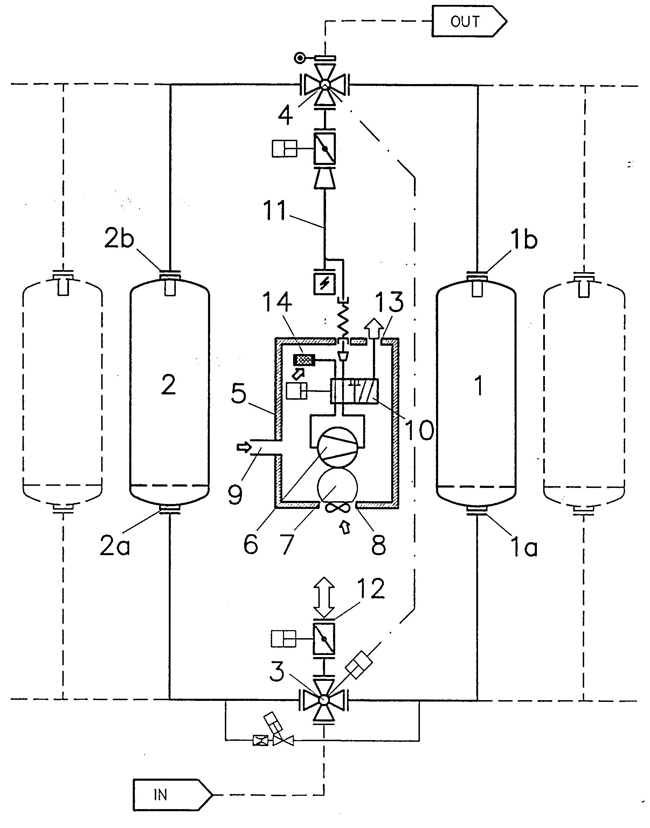

Der in der Zeichnung dargestellte warmregenerierte Adsorptionstrockner für gasförmige Medien, insbesondere Luft, weist zwei parallelliegende Adsorptionskammern 1,2 auf, die im Wechsel betrieben werden, so daß zu jeder Zeit eine Adsorptionskammer 1,2 zur Entfeuchtung des gasförmigen Mediums dient, während die andere regeneriert wird. Die Erfindung ist jedoch nicht auf diesen Wechselbetrieb beschränkt, sondern erlaubt auch den Betrieb mit einer einzigen Adsorptionskammer oder mit mehreren Adsorptionskammern die gleichphasig betrieben werden. In der Zeichnung ist gestrichelt dargestellt, daß den im Wechsel betriebenen Adsorptionskammern 1,2 jeweils eine oder mehrere Kammern parallelgeschaltet sind, die mit der jeweiligen Adsorptionskammer 1,2 gleichphasig betrieben werden.

Beim Ausführungsbeispiel können die Adsorptionskammern mit oberen und unteren Ein- und Ausgängen 1a,2a,1b,2b über Vierwegeventile 3,4 wechselweise von einer Adsorptionsphase auf eine Regenerationsphase umgeschaltet werden. Am Vierwegeventil 3 liegt ein Eingang IN für das zu trocknende gasförmige Medium, während am Vierwegeventil 4 ein Ausgang OUT für das getrocknete gasförmige Medium angeschlossen ist.

Für die Behandlung des für die Regeneration benötigten gasförmigen Mediums ist eine wärmegedämmte und insbesondere auch schallgedämmte Kammer 5 vorgesehen, in der ein Gebläse 6 mit Antriebsmotor 7 untergebracht ist. Die wärmegedämmte Kammer 5 weist zwei Ansaugöffnungen 8,9 auf. Über die Ansaugöffnung 8 wird Umgebungsluft angesaugt. Der Motor 7 ist so in der Ansaugöffnung 8 angeordnet, daß die angesaugte Umgebungsluft an ihm vorbeistreicht und unter Aufnahme von Wärme ihn kühlt. Über die Ansaugöffnung 9 kann von einer externen Wärmequelle erwärmte Luft angesaugt werden.

Das Gebläse 6 ist mit seiner Saug- und Druckseite an einem Umschaltventil 10 angeschlossen. In seiner ersten Schaltstellung saugt es über einen Filter 14 aus der Kammer 5 erwärmte Luft an und liefert sie mit Überdruck über eine Leitung 11 und das Vierwegeventil 4 an die Adsorptionskammer 1. Dieses gasförmige Medium nimmt im Adsorptionstrockner 1 Feuchtigkeit auf und gelangt über das Vierwegeventil 3 zu einem Ausgang 12 in die Atmosphäre. In der zweiten Schaltstellung des Umschaltventils 10 liegt die Leitung 11 an der Saugseite des Gebläses 6. Die Druckseite führt über einen Auslaß 13 in die Atmosphäre. In dieser Schaltstellung wird kühle Umgebungsluft über den Ein-/Auslaß 12, das Vierwegeventil 3 in den Adsorptionstrockner 1 gesaugt, von wo es über die Leitung 11 das Gebläse 6 und den Auslaß 13 in die Atmosphäre gelangt. Mit diesem zweiten Abschnitt der Regenerationsphase wird das im ersten Abschnitt der Regenerationsphase erwärmte Regenerationsmittel abgekühlt, um es für den nach Umschalten auf die Adsorptionsphase geeigneten Zustand für die Aufnahme von Feuchtigkeit aus dem zu trocknenden gasförmigen Medium zu bringen.

Für den Fall, daß für die Erwärmung des für die Regeneration benötigten gasförmigen Mediums die Abwärme des Motors 7 und die Abwärme des Gebläses 6 nicht ausreicht, stehen mehrere Alternativen zur Verfügung, die auch gemeinsam angewendet werden können:

Zum einen kann über die Ansaugöffnung 9 extern erwärmte Luft angesaugt werden. Zum anderen kann in der Leitung 11 eine Zusatzheizeinrichtung vorgesehen sein. Davon macht man in der Regel aber nur Gebrauch, wenn das für die Regeneration benötigte gasförmige Medium eine höhere Temperatur als ca. 70° C haben soll. Des weiteren kann ein Gebläse 6 eingesetzt werden, das eine höhere Kompressioinswärme erzeugt. Während man normalerweise mit Gebläsen mit einem Druck von 80 bis 100 mbar arbeitet, kann ein Gebläse mit einem Ausgangsdruck von mindestens 200 mbar eingesetzt werden.

## Patentansprüche

1. Warmregenerierter Adsorptionstrockner für gasförmige Medien mit einer oder mehreren parallelliegenden Adsorptionskammern (1,2), die insbesondere im Wechsel von Adsorption auf die Regeneration umschaltbar ist (sind), sowie mit einem Gebläse (6), das in einem ersten Abschnitt der Regenerationsphase ein erwärmtes gasförmiges Medium unter Druck der (den) zu regenerierenden Adsorptionskammer(n) und in einem zweiten Abschnitt der Regenerationsphase der (den) zu regenerierenden Adsorptionskammer(n) ein kühles gasförmiges Medium unter Unterdruck und in umgekehrter Strömungsrichtung zum ersten Abschnitt zuführt,
**dadurch gekennzeichnet**, daß
die Motorwärme des Gebläses (6) zur Erwärmung des der zu regenerierenden Adsorptionskammer (1) im ersten Abschnitt der Regenerationsphase zugeführten gasförmigen Mediums dient.

2. Adsorptionstrockner nach Anspruch 1,
**dadurch gekennzeichnet**, daß
die Ansaugseite des Gebläses (6) in einer insbesondere wärmegedämmten Kammer (5) mit einer Ansaugöffnung (8) liegt, durch die das zu erwärmende gasförmige Medium zur Aufnahme von Wärme am Motor (7) des Gebläses (6) vorbeigeleitet wird.

3. Adsorptionstrockner nach Anspruch 1 oder 2,
**dadurch gekennzeichnet**, daß
das Gebläse (6) in der wärmegedämmten Kammer (5) untergebracht ist.

4. Adsorptionstrockner nach Anspruch 2 oder 3,
**dadurch gekennzeichnet**, daß
daß die wärmegedämmte Kammer (5) eine weitere Ansaugöffnung (9) für ein extern erwärmtes gasförmiges Medium aufweist.

5. Adsorptionstrockner nach einem der Ansprüche 2-4,
**dadurch gekennzeichnet**, daß
die wärmegedämmte Kammer (5) schalldämmend ausgebildet ist.
